# EUROPEAN PATENT SPECIFICATION

(11) **EP 4 352 539 B1**
(45) Date of publication and mention of the grant of the patent: **30.07.2025**
(21) Application number: 22819700.0
(22) Date of filing: 28.03.2022
(51) Int. Cl.: G01S 7/4911, G01S 7/497, G01S 17/66, G02B 27/10

(54) **COHERENCE RECONSTRUCTION APPARATUS FOR INTERFEROMETRIC MEASUREMENT OF ATMOSPHERIC TURBULENCE**
KOHÄRENZ-REKONSTRUKTIONSVORRICHTUNG ZUR INTERFEROMETRISCHEN MESSUNG VON ATMOSPHÄRISCHEN TURBULENZEN
APPAREIL DE RECONSTRUCTION DE COHÉRENCE POUR MESURE INTERFÉROMÉTRIQUE DE TURBULENCE ATMOSPHÉRIQUE

(30) Priority: 09.06.2021 IL 28392121
(43) Date of publication of application: 17.04.2024
(73) Proprietor: Rafael Advanced Defense Systems Ltd., 3102102 Haifa (IL)
(72) Inventor: GOLUBCHIK, Daniel, 2751419 Kiryat Bialik (IL); SHWA, David, 1524100 Kfar Tavor (IL); ROGERS, Steve, 5252007 Ramat Gan (IL)
(74) Representative: Kancelaria Eupatent.pl Sp. z.o.o
(86) International application number: PCT/IB2022/052842
(87) International publication number: WO 2022/259048

(56) References cited:
- WO-A1-2020/016824
- WO-A1-2020/016824
- US-B1- 8 575 528
- US-B1- 8 575 528

## Description

### FIELD OF THE INVENTION

The present invention relates to turbulence compensation in a coherent beam combining (CBC) system, and in particular, to a coherence reconstruction apparatus for interferometric measurement of atmospheric turbulence.

### BACKGROUND OF THE INVENTION

The effectiveness of high power laser systems against non-cooperative targets is severely limited by atmospheric turbulence. One approach to mitigate the effects of turbulence uses deformable mirrors (DM) with a wave front sensor (WFS) and coherent beam combining (CBC) on the targets. However, this approach has been found to be limited to low turbulence conditions, due to the difficulty of reconstructing the phase-front in the WFS in the presence of strong turbulence. The same limitation applies to a CBC system in which multiple laser beams deform the laser wavefront without the use of a DM.

WO 2020/016824 A1 discloses a coherent beam combination system.

A different approach, which may be more effective at high levels of turbulence, is to measure atmospheric turbulence by analyzing the interference pattern between the beam reflected by a target and a reference beam, for example, in a phase shift interferometer. US Patent Number 8,575,528, issued November 5, 2013 to Barchers, discloses a coherent phased array beam transmission and imaging system for end-to-end compensation of a plurality of laser beams through a turbulent medium to a non-cooperative target. The reference beam phase is modulated in order to shift the interference pattern and reduce the sensitivity to reflected intensity. The interference pattern is typically measured by a high frame rate camera, and the time-varying atmospheric aberration is deduced from shifts in the interference pattern. This approach is sensitive at low intensity levels of the reflected beam, and avoids problems such as wave-front stitching from phase gradients when using a Wave-Front Sensor (WFS), such as a Shack-Hartmann sensor. In this approach, it is necessary for the coherence length of the laser illumination to be longer than twice the distance to the target. In some applications, the required coherence length may be on the order of many kilometers.

In order to achieve high laser power, one must suppress non-linear effects, such as Stimulated Brillouin Scattering (SBS), typically by broadening the laser linewidth or enlarging the laser spectral width. However, this has the effect of greatly reducing the laser coherence length, or coherence time; for example, a 1 kW fiber laser may have a coherence length of only a few millimeters after SBS suppression. Thus the need to suppress non-linear effects in order to achieve a high laser power is in conflict with the requirement of a long coherence length, which is needed to compensate atmospheric turbulence by phase shift interferometry.

Pseudo-Random Binary Sequence (PRBS) modulation has been used in optical telecommunications in order to increase the power of a fiber laser, while decreasing its coherence length in a deterministic manner. The PRBS sequence is typically generated from a linear feedback shift register consisting of n bits, producing a pseudo-random pattern of 2ⁿ-1 (nonzero) binary numbers. The time duration of each bit is the reciprocal of the shift register clock frequency.

### SUMMARY OF THE INVENTION

The invention provides a coherence reconstruction apparatus for interferometric measurement of atmospheric turbulence when illuminating a target at long range with a high-power CBC system.

According to one aspect of the presently disclosed subject matter, there is provided a coherence reconstruction apparatus in communication with a coherent beam combining (CBC) system which illuminates a target with one or more encoded and at least partially coherent beams which propagate through a turbulent atmosphere. The apparatus includes a variable delay module which receives a seed laser reference signal from the CBC system and a target time-of-flight (TOF) measurement, and a phase shift interferometer (PSI) which receives a target-reflected optical signal from the CBC system. The variable delay module generates a delayed reference optical signal which is coded; the PSI combines the target-reflected optical signal with the delayed reference optical signal to form an interference pattern; and the PSI determines at least one turbulence phase correction measurement from the interference pattern.

According to some aspects, the delayed reference optical signal includes at least a portion of a binary-phase code and/or a poly-phase code modulation.

According to some aspects, the binary-phase code modulation is a Pseudo-Random Binary Sequence (PRBS) modulation.

According to some aspects, the poly-phase code modulation is a generalized Barker code or a Frank code.

According to some aspects, a clock frequency of the code modulation is at least one gigahertz.

According to some aspects, the interferometer comprises one or more photodetectors.

According to some aspects, the interferometer comprises a photodiode array.

According to some aspects, the target-reflected optical signal is provided by a receiver in the CBC system.

According to some aspects, the apparatus further includes a controller which transmits a turbulence correction feedback signal to the CBC system.

According to some aspects, the apparatus further includes a controller which transmits dynamic tuning signals to the variable delay module.

According to some aspects, the seed laser reference signal is encoded.

According to some aspects, the seed laser reference signal is not encoded and the delay module includes a code delay module.

According to some aspects, the TOF measurement is provided by a target range tracker and/or a Target-in-the-Loop tracking system.

According to some aspects, the delay module includes an electromagnetically induced transparency (EIT) medium and/or a pump laser.

### BRIEF DESCRIPTION OF THE DRAWINGS

The invention is herein described, by way of example only, with reference to the accompanying drawing.
FIG. 1 is a schematic drawing of an exemplary coherence reconstruction apparatus, according a first embodiment the invention.
FIG. 2 is a schematic drawing of an exemplary coherence reconstruction apparatus, according a second embodiment the invention.

### DETAILED DESCRIPTION OF THE PREFERRED EMBODIMENTS

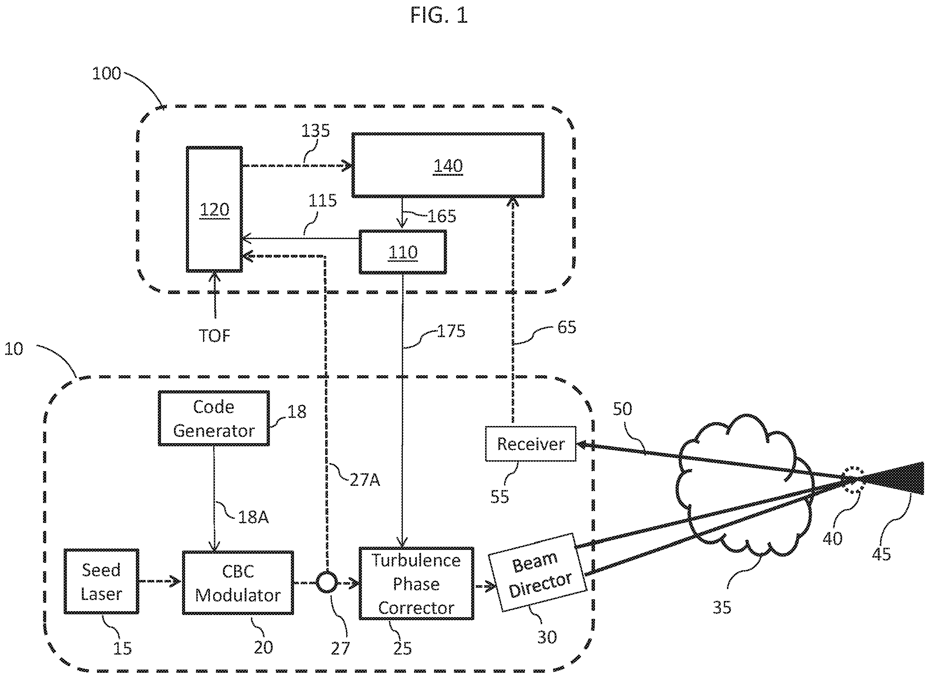

FIG. 1 shows a schematic drawing of an exemplary coherence reconstruction apparatus 100, according to a first embodiment of the invention. Apparatus 100 communicates with CBC system 10 and includes a variable delay module 120 and a phase shift interferometer (PSI) 140. The apparatus receives as input:
(a) a seed laser reference signal 27A provided by the CBC system;
(b) a target-reflected optical signal 65 provided by the CBC system; and
(c) a target time-of-flight (TOF) measurement
The variable delay module uses inputs (a) and (c) to generate a delayed reference optical signal 135. PSI 140 combines signal 135 with input (b) to form an interference pattern, from which one or more turbulence phase correction measurements 165 are determined.

The following sections describe each of the signals and signal processing functions in detail.

### Seed Laser Reference Signal

This signal is provided by the CBC system 10. The CBC system generates and directs a multiplicity of coherent laser beams to illuminate a generally non-cooperative target 45. For clarity of presentation, only one illumination beam is shown in the exemplary CBC system of FIG. 1, with the understanding that the coherence reconstruction apparatus of the invention may operate independently and in parallel on more than one beam of a CBC system.

Seed laser 15 injects coherent light into a CBC electro-optical modulator 20. Modulator 20 receives a phase modulation code signal 18A from a code generator 18. The phase modulation corresponds to a deterministic code, such as a binary-phase or a poly-phase code. Code generator 18 typically includes a linear feedback shift register having a shift register clock frequency which is, for example, greater than or equal to 1 gigahertz (GHz).

PRBS is one example of a binary-phase code. A PRBS code consists typically of a repeating sequence of 2ⁿ-1 binary numbers each having (n) bits, where a bit represents a phase shift of zero or pi radians. The sequence includes all nonzero binary numbers arranged in a randomized, but deterministic, order. The value of integer (n) is typically greater than or equal to eight, in order to provide sufficient signal-to-noise ratio for coherence reconstruction.

Poly-phase codes include, for example, generalized Barker codes, Frank codes, and a variety of other modulation codes which are known to those skilled in the art of signal processing.

The encoded optical beam propagates from modulator 20 to beamsplitter 27, along the propagation path indicated by the dashed arrow in FIG. 1. The beamsplitter redirects a portion of the encoded optical signal power to form the seed laser reference signal 27A. Beamsplitter 27 may be implemented, for example, using fiber-optic splitters, reflective optics, and/or diffractive optical elements. Note that in the embodiment shown in FIG. 1, the seed laser reference signal 27A is already encoded with the modulation code.

### Target-Reflected Optical Signal

This signal is provided by the CBC system 10. In FIG. 1, beamsplitter 27 transmits a second optical beam along the path indicated by the dashed arrow entering into a turbulence phase corrector 25. The latter receives a turbulence correction feedback signal 175 from the coherence reconstruction apparatus 100, and applies an optical phase correction to the CBC output beams so that they combine in-phase (constructively) at the illumination spot 40 formed on the target surface.

The turbulence-corrected optical beam enters a beam director 30, which steers the beam with high angular accuracy, typically on the order of a few micro-radians. The beam is focused, together with other illumination beams provided by the CBC system, onto an illumination spot 40 on the surface of the target 45. A portion of the energy impinging on the target forms a reflected beam 50, whose phase and intensity are distorted by time-varying turbulent perturbations as the beam propagates through moving air masses in a turbulent region 35 of the atmosphere.

A CBC receiver 55, which typically includes a telescopic optical system with an entrance aperture, receives a portion of the light in the reflected beam 50. At target ranges of several kilometers, the power of the received light may be 9 to 12 orders of magnitude smaller than the illumination power emitted by the CBC system. The receiver sends a target-reflected optical signal 65, indicated by a dashed arrow, to the PSI 140 of the coherence reconstruction apparatus 100. Signal 65 is typically a fiber-optic or a free-space optical signal.

### Target Time-of-Flight (TOF) Measurement

This measurement is typically provided by a target range tracker or a Target-in-the-Loop (TIL) system (not shown in FIG. 1). The TOF is equal to twice the target range, R, divided by the speed of light, c, in the atmosphere. For example, with c=3x10⁸ meters/sec and R = 3000 meters, the TOF is equal to 2R/c = 20x10⁻⁶ sec, or 20 microseconds.

Continuing with the description of the coherence reconstruction apparatus 100 of FIG. 1, the variable delay module 120 receives the seed laser reference signal 27A and the target TOF measurement. An exemplary embodiment for module 120 incorporates a coherent control art device, which includes an electromagnetically induced transparency (EIT) medium and a pump laser to tune the group velocity of the seed laser reference signal 125 in the medium. Module 120 generates a delayed reference optical signal 135.

The PSI 140 receives signal 135 and the target-reflected optical signal 65, both of which are typically of fiber-optic or free-space optical signals. The PSI forms an interference pattern between the two signals 65 and 135 using one or more photodetectors, such as for example, a photodiode array. In the absence of atmospheric turbulence, the two signals would be in phase, to within a constant phase offset, and there would be no interference pattern; the presence of an interference pattern is caused solely by atmospheric turbulence. PSI 140 converts the interference pattern into one or more turbulence measurement signal(s) 165. Generally, the use of interferometry greatly improves the signal-to-noise ratio of the turbulence measurement signals, especially when the reflected beam passes through a strong turbulence regime, characterized by large fluctuations in the intensity of the reflected beam.

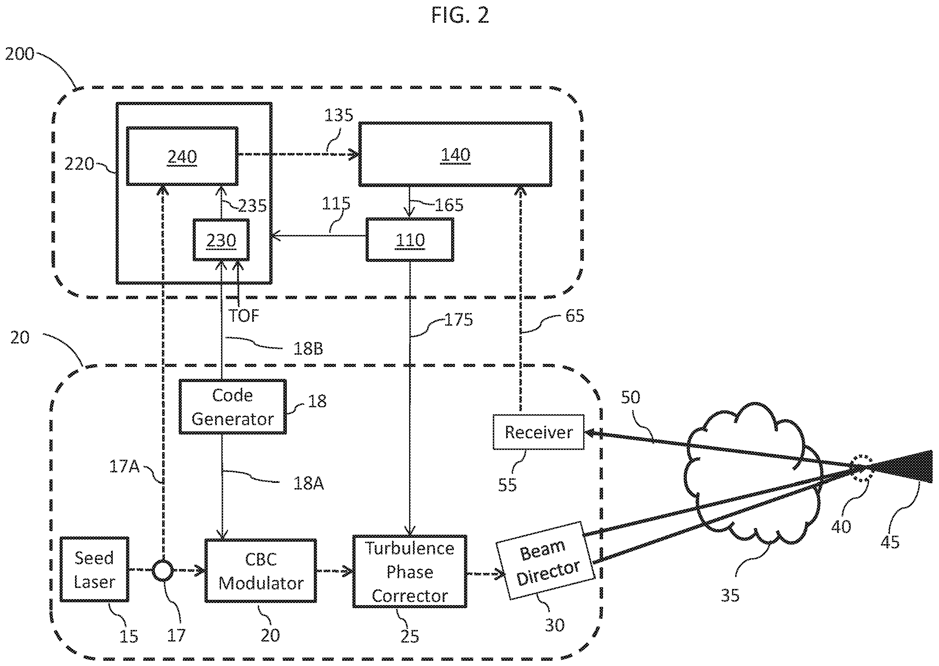

FIG. 2 shows a schematic drawing of an exemplary coherence reconstruction apparatus 200, according to a second embodiment of the invention. This embodiment differs from that in FIG. 1 in the following respects.

In CBC system 20 of FIG. 2, a beamsplitter 17 is positioned between the seed laser 15 and the CBC modulator 20, which is different from the placement of beamsplitter 27 in FIG. 1. The beamsplitter 17 sends an unencoded seed laser reference signal 17A to the coherence reconstruction apparatus 200.

In apparatus 200, a variable delay module 220 includes a code delay module 230 and an optical delay module 240. Code delay module 230 receives a phase modulation code signal from code generator 18 and introduces a time delay equal to the received target TOF measurement in order to form a delayed code signal 235. Delay module 230 uses, for example, a digital-to-analog converter (DAC) or a voltage-controlled oscillator (VCO) followed by an RF amplifier, to generate a delayed code signal 235.

Optical delay module 240 receives the signal 235 and the unencoded seed laser reference signal 17A. Variable delay module 240 typically generates an analog signal representing the code modulation, using componentry similar to that used in CBC modulator 20, but with the additional input of delayed code signal 235. The analog signal drives an electro-optical (EO) modulator, such as a lithium niobate EO modulator. The latter generates the delayed reference optical signal 135, which is sent to the PSI 140.

Additional embodiments of the reconstruction apparatus 100 and/or the reconstruction apparatus 200 include a controller 110, which fulfills any one of several functions. One function is to generate the turbulence correction feedback signal 175 and to send it to the turbulence phase corrector 25 of the CBC system. A second function of controller 110 is to generate and transmit dynamic tuning signals 115 to the variable delay module. The tuning signals typically contain TOF offsets that are determined by analyzing incremental shifts in the interference pattern formed in the PSI.

Although the embodiments of the present disclosure have been described within the context of binary-phase and poly-phase modulation, the principles of the present disclosure may be equally applicable to implementations that use other types of phase modulation.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A coherence reconstruction apparatus (100) in communication with a coherent beam combining, CBC, system (10) which is configured to illuminate a target with one or more encoded and at least partially coherent beams which propagate through a turbulent atmosphere (35), the apparatus comprising:
a variable delay module (120) which is configured to receive a seed laser reference signal (27A) from the CBC system and a target time-of-flight, TOF, measurement; and
a phase shift interferometer, PSI, (140) which is configured to receive a target-reflected optical signa (65) from the CBC system;
wherein
the variable delay module is configured to generate a delayed reference optical signal (135) which is coded;
the PSI is configured to combine the target-reflected optical signal with the delayed reference optical signal to form an interference pattern; and
the PSI is configured to determine at least one turbulence phase correction measurement from the interference pattern.

2. The apparatus of claim 1 wherein the delayed reference optical signal comprises at least a portion of a binary-phase code and/or a poly-phase code modulation.

3. The apparatus of claim 2 wherein the binary-phase code modulation is a Pseudo-Random Binary Sequence (PRBS) modulation.

4. The apparatus of claim 2 wherein the poly-phase code modulation is a generalized Barker code or a Frank code.

5. The apparatus of claim 2 wherein a clock frequency of the code modulation is at least one gigahertz.

6. The apparatus of claim 1 wherein the interferometer comprises one or more photodetectors.

7. The apparatus of claim 1 wherein the interferometer comprises a photodiode array.

8. The apparatus of claim 1 wherein the target-reflected optical signal is provided by a receiver in the CBC system.

9. The apparatus of claim 1 further comprising a controller which transmits a turbulence correction feedback signal to the CBC system.

10. The apparatus of claim 1 further comprising a controller which transmits dynamic tuning signals to the variable delay module.

11. The apparatus of claim 1 wherein the seed laser reference signal is encoded.

12. The apparatus of claim 1 wherein the seed laser reference signal is not encoded and the delay module comprises a code delay module.

13. The apparatus of claim 1 wherein the TOF measurement is provided by a target range tracker and/or a Target-in-the-Loop tracking system.

14. The apparatus of claim 1 wherein the delay module comprises an electromagnetically induced transparency (EIT) medium and/or a pump laser.

## Patentansprüche

1. Kohärenz-Rekonstruktionsvorrichtung (100) in Kommunikation mit einem System zum Kombinieren kohärenter Strahlen (coherent beam combining system - CBC-System) (10), das konfiguriert ist, um ein Ziel mit einem oder mehreren codierten und mindestens teilweise kohärenten Strahlen, die sich durch eine turbulente Atmosphäre (35) ausbreiten, zu beleuchten, wobei die Vorrichtung Folgendes umfasst:
ein Modul (120) zur variablen Verzögerung, das konfiguriert ist, um ein Seed-Laser-Referenzsignal (27A) von dem CBC-System und eine Ziel-Laufzeit(time-of-flight - TOF)-Messung zu empfangen; und
ein Phasenverschiebungsinterferometer (phase shift interferometer - PSI) (140), das konfiguriert ist, um ein von dem Ziel reflektiertes optisches Signal (65) von dem CBC-System zu empfangen;
wobei
das Modul zur variablen Verzögerung konfiguriert ist, um ein verzögertes optisches Referenzsignal (135) zu erzeugen, das codiert ist;
das PSI konfiguriert ist, um das von dem Ziel reflektierte optische Signal mit dem verzögerten optischen Referenzsignal zu kombinieren, um ein Interferenzmuster zu bilden; und
das PSI konfiguriert ist, um aus dem Interferenzmuster mindestens eine Turbulenzphasenkorrekturmessung zu bestimmen.

2. Vorrichtung nach Anspruch 1, wobei das verzögerte optische Referenzsignal mindestens einen Teil einer Binärphasencode- und/oder Mehrphasencodemodulation umfasst.

3. Vorrichtung nach Anspruch 2, wobei die Binärphasencodemodulation eine Pseudozufällige-Binärsequenz(Pseudo-Random Binary Sequence - PRBS)-Modulation ist.

4. Vorrichtung nach Anspruch 2, wobei die Mehrphasencodemodulation ein generalisierter Barker-Code oder ein Frank-Code ist.

5. Vorrichtung nach Anspruch 2, wobei eine Taktfrequenz der Codemodulation mindestens ein Gigahertz beträgt.

6. Vorrichtung nach Anspruch 1, wobei das Interferometer einen oder mehrere Fotodetektoren umfasst.

7. Vorrichtung nach Anspruch 1, wobei das Interferometer ein Fotodiodenarray umfasst.

8. Vorrichtung nach Anspruch 1, wobei das von dem Ziel reflektierte optische Signal durch einen Empfänger in dem CBC-System bereitgestellt wird.

9. Vorrichtung nach Anspruch 1, ferner umfassend eine Steuerung, die ein Turbulenzkorrektur-Rückkopplungssignal an das CBC-System überträgt.

10. Vorrichtung nach Anspruch 1, ferner umfassend eine Steuerung, die dynamische Abstimmsignale an das Modul zur variablen Verzögerung überträgt.

11. Vorrichtung nach Anspruch 1, wobei das Seed-Laser-Referenzsignal codiert ist.

12. Vorrichtung nach Anspruch 1, wobei das Seed-Laser-Referenzsignal nicht codiert ist und das Verzögerungsmodul ein Codeverzögerungsmodul umfasst.

13. Vorrichtung nach Anspruch 1, wobei die TOF-Messung durch einen Ziel-Entfernungs-Tracker und/oder ein Target-in-the-Loop-Tracking-System bereitgestellt wird.

14. Vorrichtung nach Anspruch 1, wobei das Verzögerungsmodul ein Medium mit elektromagnetisch induzierter Transparenz (EIT) und/oder einen Pumplaser umfasst.

## Revendications

1. Appareil de reconstruction de cohérence (100) en communication avec un système de combinaison cohérente de faisceaux, CBC (10), configuré pour illuminer une cible à l'aide d'un ou de plusieurs faisceaux codés et au moins partiellement cohérents qui se propagent à travers une atmosphère turbulente (35), l'appareil comprenant (35) :
un module à retard variable (120) configuré pour recevoir un signal de référence laser d'amorce (27A) du système CBC et une mesure de temps de vol, TOF, cible ; et un interféromètre à décalage de phase, PSI, (140) configuré pour recevoir un signal optique réfléchi par la cible (65) du système CBC ;
**caractérisé en ce que**
le module à retard variable est configuré pour générer un signal optique de référence retardé (135) qui est codé ;
le PSI est configuré pour combiner le signal optique réfléchi par la cible avec le signal optique de référence retardé pour former une figure d'interférence ; et
le PSI est configuré pour déterminer au moins une mesure de correction de phase de turbulence à partir de la figure d'interférence.

2. Dispositif selon la revendication 1, **caractérisé en ce que** le signal optique de référence retardé comprend au moins une partie d'une modulation de code biphasé et/ou de code polyphasé.

3. Dispositif selon la revendication 2, **caractérisé en ce que** la modulation de code biphasé est une modulation de séquence binaire pseudo-aléatoire (PRBS).

4. Dispositif selon la revendication 2, **caractérisé en ce que** la modulation de code polyphasé est un code de Barker généralisé ou un code de Frank.

5. Dispositif selon la revendication 2, **caractérisé en ce qu'**une fréquence d'horloge de la modulation de code est d'au moins un gigahertz.

6. Dispositif selon la revendication 1, **caractérisé en ce que** l'interféromètre comprend un ou plusieurs photodétecteurs.

7. Dispositif selon la revendication 1, **caractérisé en ce que** l'interféromètre comprend une photodiode.

8. Dispositif selon la revendication 1, **caractérisé en ce que** le signal optique réfléchi par la cible est fourni par un récepteur dans le système CBC.

9. Dispositif selon la revendication 1, comprenant en outre un contrôleur qui transmet un signal de rétroaction de correction de turbulence au système CBC.

10. Dispositif selon la revendication 1, comprenant en outre un contrôleur qui transmet des signaux d'accord dynamique au module de retard variable.

11. Dispositif selon la revendication 1, **caractérisé en ce que** le signal de référence laser d'amorce est codé.

12. Dispositif selon la revendication 1, **caractérisé en ce que** le signal de référence laser d'amorce n'est pas codé et le module de retard comprend un module de retard de code.

13. Dispositif selon la revendication 1, **caractérisé en ce que** la mesure TOF est fournie par un traqueur de distance de la cible et/ou un système de suivi « Target-in-the-Loop ».

14. Dispositif selon la revendication 1, **caractérisé en ce que** le module de retard comprend un milieu de transparence induite électromagnétiquement (EIT) et/ou un laser de pompe.
